# EUROPEAN PATENT SPECIFICATION

(11) **EP 2 118 158 B1**
(45) Date of publication and mention of the grant of the patent: **31.08.2011**
(21) Application number: 08707240.1
(22) Date of filing: 24.01.2008
(51) Int. Cl.: C08F 297/08, C08J 5/18, C08L 23/08

(54) **POLYMER**
POLYMER
POLYMÈRE

(30) Priority: 25.01.2007 EP 07250307
(43) Date of publication of application: 18.11.2009
(73) Proprietor: Borealis Technology OY, 06101 Porvoo (FI)
(72) Inventor: KRAJETE, Alexander, A-5020 Salzburg (AT); DRENG, Tore, N-3261 Larvik (NO); NORD-VARHAUG, Katrin, N-3942 Porsgrunn (NO)
(74) Representative: Campbell, Neil Boyd
(86) International application number: PCT/EP2008/000529
(87) International publication number: WO 2008/089979

(56) References cited:
- EP-A1- 1 333 044
- WO-A-2005/002744
- US-A1- 2004 266 966

## Description

The invention relates to a multimodal polyethylene polymer and to films comprising said polymer which possess excellent optical properties and excellent processability. In particular, the invention concerns a multimodal medium density polyethylene (multimodal MDPE) polymer which comprises at least a component (A) with a lower weight average molecular weight (= LMW component (A)) and a component (B) with higher weight average molecular weight (= HMW component (B)), which is obtainable using single site catalysis and which possesses excellent optical properties.

It is known that a bimodal polymer offers certain advantages over a unimodal polymer in particular with regard to its processability. Bimodal polymers tend to have broad molecular weight distributions which allow processing conditions to be more rigorous than those typically employed when unimodal polymers are employed.

Unfortunately, the increase in processability is associated with a reduction in optical properties in films formed from the polymer. Moreover, the increase in density required to achieve high stiffness in a polymer normally causes a reduction in optical properties.

Thus, the problem faced by the film manufacturer is that by trying to improve processability, another equally important property, haze, tends to be detrimentally affected.

In prior art multimodal polyethylene copolymers, the comonomer content in the LMW component is typically low compared to the overall comonomer content present in the final polyethylene composition.

Other multimodal polymer compositions are known in the art. WO03/066699 of the Applicant discloses linear low density polyethylene (LLDPE) terpolymers with preferred densities generally defined as 905 to 930 kg/m³ with Examples having a density of 919 kg/m³.

There remains a need for polyethylene compositions having a medium density and good optical properties. The present inventors have found that certain medium density multimodal polyethylene polymers which possess a particular comonomer content and comonomer distribution provide films having highly desirable optical properties despite their medium density. The inventors have found that the relationship between the comonomer content of the LMW component and the overall comonomer content of the polymer as a whole is critical for optical properties. The invention thus provides a multimodal medium density polyethylene polymer obtainable using a single site catalyst which has optical properties that are preferably at least as good as, especially even better than prior art linear low density materials (LLDPE). The optical properties may be expressed by means of haze.

Thus, viewed from one aspect the invention provides a multimodal medium density polyethylene polymer obtainable using single site catalysis which comprises at least:
(A) a lower molecular weight (LMW) component which is a copolymer of ethylene with at least one comonomer, and
(B) a higher molecular weight (HMW) component which is a copolymer of ethylene with at least one comonomer; wherein
said multimodal medium density polyethylene polymer has a density of more than 925 kg/m³; and
the ratio between the comonomer content in mol-% present in LMW component (A) and the total comonomer content in mol-% present in the multimodal medium density polyethylene polymer is more than 0.3.

The combination of medium density together with comonomer distribution between the LMW component (A) and the final multimodal medium density polyethylene polymer (multimodal MDPE) as defined above contributes to the advantageous balance between optical and mechanical properties of the multimodal MDPE polymer of the invention.

Viewed from another aspect, the invention provides a polymer composition comprising the multimodal MDPE polymer as hereinbefore described.

Viewed from another aspect the invention provides a film comprising the multimodal MDPE polymer as hereinbefore described.

The multimodal MDPE polymer of the invention has improved optical properties compared to prior art MDPE compositions.

The MDPE polymer of the invention is produced by a single site catalyst. Thus, all components of the MDPE polymer are made using single site catalyst technology. Whilst individual components might be formed using different single site catalysts, it is preferred if all the components of the MDPE polymer are prepared by the same single site catalyst. Thus the invention provides a very homogeneous blend of components to form the medium density polyethylene polymer of the invention with its excellent optical properties. Thus, for the densities claimed, the present MDPE polymer provides films with decreased haze and improved transparency without addition of components such as high pressure LDPE.

The MDPE polymer of the invention is very advantageous in different end applications, and particularly useful for end applications wherein optical properties play an important role, such as for film applications. Viewed from another aspect the invention provides the use of the multimodal MDPE polymer of the invention for producing films, preferably for packaging films, e.g. food packaging.

### Properties of the Multimodal Medium Density Polyethylene Polymer

A multimodal MDPE polymer of the invention is multimodal at least with respect to the molecular weight distribution. It therefore contains at least a component (A) with a lower weight average molecular weight (LMW) and a component (B) with a higher weight average molecular weight (LMW).

Usually, a MDPE polymer comprising at least two polyethylene fractions, which have been produced under different polymerisation conditions resulting in different (weight average) molecular weights and molecular weight distributions for the fractions, is referred to as "multimodal". The prefix "multi" relates to the number of different polymer fractions present in the polymer. Thus, for example, multimodal polymer includes so called "bimodal" polymer consisting of two fractions. The form of the molecular weight distribution curve, i.e. the appearance of the graph of the polymer weight fraction as function of its molecular weight, of a multimodal polyethylene will show two or more maxima or at least be distinctly broadened in comparison with the curves for the individual fractions. For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In any multimodal polyethylene there is by definition a lower molecular weight component (LMW) and a higher molecular weight component (HMW). The LMW component has a lower molecular weight than the higher molecular weight component. Preferably there may be a difference in molecular weight of at least 1000, preferably at least 5000 between components.

The composition of the invention comprises a multimodal polyethylene polymer which has a density in the medium density range. The multimodal polyethylene may have a density of more than 925 kg/m³ (ISO 1183). The density of the multimodal MDPE composition is preferably less than 950 kg/m³. Preferably the density is between 927 and 945 kg/m³, more preferably in the range of 929 to 940 kg/m³. In some embodiments a density of 930 to 935 kg/m³ is preferred.

The ratio of the comonomer content (mol-%) present in component (A) and present in the final MDPE polymer, i.e. (comonomer content, mol-%, of component (A)):(total comonomer content, mol-%, of the final multimodal MDPE polymer), is > 0.3. The upper limit of said comonomer ratio may typically be less than 3. In one preferable embodiment said ratio of (comonomer content, mol-%, of component (A)):(total comonomer content, mol-%, of the final multimodal MDPE polymer) is in the range of 0.4 to 2, preferably 0.5 or more, more preferably 0.6 or more. Depending on the end application said range may even be 0.6 to 1.3.

Both LMW and HMW components are copolymers of ethylene. The term "ethylene copolymer" is used in this context to encompass polymers comprising repeat units deriving from ethylene and at least one other C3-12 alpha olefin monomer.

Thus, the multimodal MDPE polymer may be formed from ethylene along with at least one C₃₋₁₂ alpha-olefin comonomer, e.g. 1-butene, 1-hexene or 1-octene. The comonomer(s) of LMW component (A) may be the same or different from the comonomer(s) of the HMW component (B).

Preferably, the multimodal MDPE polymer is a binary copolymer, i.e. the polymer as a whole contains ethylene and one comonomer, or is a terpolymer, i.e. the polymer contains ethylene and two comonomers. The multimodal MDPE may also contain three or more comonomers. Preferably, the multimodal MDPE polymer comprises at least an ethylene butene copolymer component, an ethylene hexene copolymer component or ethylene octene copolymer component.

Where the multimodal MDPE contains two or more comonomers, the comonomer with lower weight average molecular weight, comonomer_{LMW}, is preferably present at least in the LMW component (A) and optionally also in the HMW component (B), more preferably both in LMW component (A) and HMW component (B). Also preferably the comonomer with higher weight average molecular weight, comonmer_{HMW}, is preferably present at least in the HMW component (B) and optionally also in the LMW component (A), more preferably only in the HMW component (B).

In a highly preferred embodiment the LMW component (A) is a binary copolymer, i.e. contains ethylene and one monomer only, preferably 1-butene, and the HMW component (B) is a terpolymer of ethylene and two comonomers, preferably 1-butene and 1-hexene.

In a preferred embodiment of the invention the multimodal MDPE polymer of the invention is also multimodal with respect to comonomer distribution. Multimodality with respect to comonomer distribution means herein that the comonomer content (mol-%) of LMW component (A) differs from the comonomer content (mol-%) of the HMW component (B). The preferred comonomer contents of components (A) and (B) are defined below.

The following comonomer contents are thus preferable. The amount of the comonomer in the final multimodal MDPE polymer, i.e. the total comonomer content, is preferably less than 7 mol%, preferably less than 5 mol%, more preferably 0.01 to 4 mol%, such as below 3 mol-%, e.g. 1.5 to 3 mol%.

The amount of the comonomer in the LMW component (A), i.e. the comonomer content (A), is typically more than 0.5 and up to 3 mol%, preferably 0.7 up to 3 mol%, more preferably more than 0.9 mol-%, e.g. 1 to 2 mol%.

The amount of the comonomer in the HMW component (B) is preferably 0.5 to 5 mol%, more preferably 1.0 to 3 mol%, such as 1.3 to 2.5 mol%.

Where the multimodal MDPE polymer contains two different comonomers (e.g. butene and hexene), then the ratio in the MDPE polymer between the content (mol%) of the comonomer with the lower molecular weight (e.g. butene) and the content (mol%) of said comonomer with higher molecular weight (e.g. hexene) (comonomer_{LMW}:comonmer_{HMW}) in the final multimodal MDPE composition is preferably 1:1 and 30:1, preferably 15:1 and 3:1.

Furthermore, in embodiments wherein two different comonomers are both present in the HMW component (B), i.e. a comonomer with lower molecular weight (e.g. butene) and a comonomer with higher molecular weight (e.g. hexene), the ratio between mol%-content of comonomer_{LMW} and mol%-content of comonmer_{HMW} in HMW component (B) is typically 0.3:1 to 20:1, preferably 0.6:1 to 10:1.

The MFR₂ of the multimodal MDPE polymer depends on the end application area and may be in the range 0.01 to 10 g/10min, preferably 0.05 to 5g/10min, e.g. 0.1-3.5 g/10min, more preferably 0.5 - 3.0 g/10min. For some film applications even 0.8 to 2.5 g/10min or 0.9 to 2.5 g/10 min may be desired.

The MFR₂₁ for multimodal MDPE polymer should be in the range 5 to 200 g/10 min.

The Mw of multimodal MDPE composition should be in the range 100,000 to 250,000, preferably 120,000 to 150,000. The Mw/Mn for multimodal MDPE composition of the invention should be greater than 3, e.g. in the range 3 to 30, e.g. 3.5 to 10, more preferably 5 to 8.

The LMW component (A) of the multimodal MDPE polymer as defined above has preferably a MFR₂ of at least 50, preferably at least 100 g/10min, preferably 110 to 3000 g/10min, e.g. 110 to 500 g/10min, especially 150 to 300 g/10min. The molecular weight of the LMW component (A) should preferably range from 20,000 to 50,000, e.g. 25,000 to 40,000.

The density of the LMW component (A) may range from 930 to 965 kg/m³, e.g. 935 to 955 kg/m³ preferably 938 to 950 kg/m³

The lower molecular weight (LMW) component (A) should preferably form 30 to 70 wt%, e.g. 40 to 60% by weight of the multimodal MDPE composition of the invention with the higher molecular weight (HMW) component (B) forming 70 to 30 wt%, e.g. 40 to 60% by weight, most preferably the weight ratio of LMW and HMW components is 55:45 to 45:55.

The higher molecular weight component should have a lower MFR₂ and a lower density than the lower molecular weight component.

The HMW component (B) should have an MFR₂ of less than 1 g/10 min, preferably less than 0.5 g/10 min, especially less than 0.2 g/10min. Its density is preferably above 900 kg/m³, preferably between 910 to 930 kg/m³, more preferably less than 925 kg/m³. The Mw of the HMW component (B) may range from 100,000 to 1,000,000, preferably 150,000 to 500,000, most preferably 250,000 to 350,000.

The multimodal MDPE polymer of the invention may include a prepolymerised fraction in a manner well known in the art. In this embodiment therefore said multimodal MDPE polymer is preferably bimodal or trimodal, more preferably a bimodal MDPE consisting of LMW component (A), HMW component (B) and, optionally, the prepolymerised fraction as defined below.

The multimodal MDPE polymer of the invention may comprise up to 10 % by weight of a such a polyethylene prepolymer (obtainable from a prepolymerisation step as well known in the art). Where a prepolymeriser present, the prepolymer component forms part of one of LMW and HMW components (A) and (B), preferably LMW component (A), and this component still has the properties defined above.

The multimodal MDPE polymer of the invention has improved optical properties which can be comparable or even improved over the prior art LLDPEs. Without wishing to be limited by theory, it is believed that the improved optical properties are due to the comonomer content present in LMW component (A) in relation to the overall, i.e. total, comonomer content present in the final multimodal MDPE polymer.

Thus, haze (%) may be less than 50, preferably less than 40, when measured according ASTM D 1003 using a blown film sample as prepared according to the method described below under **"Film Sample preparation"** with a film thickness of 40 µm.

The haze thickness ratio, i.e. haze (%) divided by film thickness (µm), (%/µm) is preferably less than 1.6, more preferably less than 1.3, such as 0.3-1.1 measured using a blown film sample as prepared according to the method described under **"Film Sample preparation"** below.

Naturally, all the preferred features described above and below apply generally to the multimodal MDPE polymer of the invention in any combination as a preferable subgroup(s) of the invention.

All components of the MDPE polymer of the invention are obtainable using a single site catalyst. More preferably the components are produced using a single site catalyst selected from metallocenes or non-metallocenes, preferably metallocenes. The terms "metallocene" and "non-metallocene" are well known in the polymer field. The MDPE polymer of the invention may be referred herein also as "single site produced MDPE polymer", and when the single site catalyst is metallocene, then as an mMDPE polymer.

The multimodal MDPE polymer of the invention may be a mechanical blend, in situ-blend or a combination of a mechanical and in-situ blend, preferably in-situ blend, of the polyethylene components comprising at least the LMW component (A) and HMW component (B). The term "in situ blend" is well known in the art and means that the blend is formed by producing the first component and then by producing the second or further component(s) in the presence of the previously formed component(s).

The present invention also provides a method for preparing the multimodal MDPE polymer of the invention.

Multimodal polyethylene polymers may be prepared for example by two or more stage polymerization or by the use of two or more different polymerization catalysts in a one stage polymerization. It is also possible to employ a multi- or dualsite catalyst. It is important to ensure that the higher and lower molecular weight components are intimately mixed prior to extrusion. This is most advantageously achieved by using a multistage process or a dual site.

Preferably the multimodal MDPE polymer is produced in a multistage polymerization process. In said multistage process preferably the same catalyst, e.g. a metallocene catalyst, is used in each process step thereof.

The multistage polymerisation is preferably effected in two or more stages in series, whereby the components, e.g. at least the LMW component (A) and HMW component (B) as defined above, are produced in any order using any conventional polymerisation process, e.g. slurry polymerisations or gas phase polymerisations, or a combination of slurry and gas phase polymerisation(s) in any order. Preferably, where a multistage process is used, the LMW component is prepared first.

Preferably however, the multimodal polyethylene is made using a slurry polymerization in a loop reactor followed by a gas phase polymerization in a gas phase reactor.

A loop reactor - gas phase reactor system is marketed by Borealis as a BORSTAR reactor system. Any multimodal polyethylene of use in the outer layer is thus preferably formed in a two stage process comprising a first slurry loop polymerisation followed by gas phase polymerisation. Such multistage process is disclosed e.g. in EP517868.

The conditions used in such processes are well known. For slurry reactors, the reaction temperature will generally be in the range 60 to 110 °C (e.g. 85-110 °C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100 °C. Preferred diluents include hydrocarbons such as propane or isobutane. Hydrogen is also preferably fed into the reactor to function as a molecular weight regulator.

If gas phase reactions are employed then conditions are preferably as follows:
- the temperature is within the range of 50°C to 130°C, preferably between 60°C and 115 °C,
- the pressure is within the range of 10 bar to 60 bar, preferably between 10 bar to 40 bar,
- hydrogen can be added for controlling the molar mass in a manner known per se,
- the residence time is typically 1 to 8 hours..

The gas used will commonly be a non-reactive gas such as nitrogen or low boiling point hydrocarbons such as propane together with monomer (e.g. ethylene).

As an example a chain-transfer agent, preferably hydrogen, is added as required to the reactors, and at least 100 to preferably at least 200, and up to 1500, preferably up to 800 moles of H₂/kmoles of ethylene are added to the loop reactor, when the LMW fraction is produced in this reactor, and 0 to 60 or 0 to 50, and, again depending on the desired end application, in certain embodiments even up to 100, or up to 500 moles of H₂/kmoles of ethylene are added to the gas phase reactor when this reactor is producing the HMW fraction.

If desired, the polymerisation may be effected in a known manner under supercritical conditions in the slurry, preferably loop reactor, and/or as a condensed mode in the gas phase reactor.

The gas phase polymerisation may be conducted in a manner known in the art, such as in a bed fluidised by gas feed or in mechanically agitated bed. Also fast fluidisation may be utilised.

Preferably, the lower molecular weight polymer fraction is produced in a continuously operating loop reactor where ethylene is polymerised in the presence of a polymerisation catalyst as stated below and a chain transfer agent such as hydrogen. The diluent is typically an inert aliphatic hydrocarbon, preferably isobutane or propane.

The higher molecular weight component can then be formed in a gas phase reactor, preferably using the same catalyst.

The multistage process wherein the LMW component as defined above is produced in a slurry process and the HMW component is produced in a gas phase reactor in the presence of the LMW component of the previous step, results in a particularly preferable combination.

The process is typically carried out as a continuous process.

Thus, viewed from a further aspect, the invention provides a process for the preparation of a multimodal medium density polyethlyene polymer as herein before defined comprising in a first liquid phase stage, polymerising ethylene and optionally at least one C₃-₁₂ alpha-olefin in the presence of a polymerisation catalyst to form a LMW component and subsequently polymerising ethylene and at least one C3-12 alpha-olefin in the gas phase using a polymerisation catalyst, preferably the same polymerisation catalyst in the presence of the reaction product obtained from the first liquid stage, to form a HMW component.

A prepolymerisation step may be included in a well known manner before the above described actual polymerisation steps to provide the prepolymer component mentioned above.

Where the higher molecular weight component is made second in a multistage polymerisation it is not possible to measure its properties directly. However, the skilled man is able to determine the density, MFR₂ etc of the higher molecular weight component using Kim McAuley's equations. Thus, both density and MFR₂ can be found using K. K. McAuley and J. F. McGregor: On-line Inference of Polymer Properties in an Industrial Polyethylene Reactor, AIChE Journal, June 1991, Vol. 37, No, 6, pages 825-835.

The density is calculated from McAuley's equation 37, where final density and density after the first reactor is known.

MFR₂ is calculated from McAuley's equation 25, where final MFR₂ and MFR₂ after the first reactor is calculated. The use of these equations to calculate polymer properties in multimodal polymers is common place.

The multimodal polyethylene polymer may be made using conventional single site catalysis as is known in the art. The single site catalyst used for making the desired component is not critical, (including well known metallocenes and non-metallocenes).

Preferably said catalyst is one comprising a metal coordinated by one or more η-bonding ligands. Such η-bonded metals are typically Zr, Hf or Ti, especially Zr or Hf. The η-bonding ligand is typically an η⁵-cyclic ligand, i.e. a homo or heterocyclic cyclopentadienyl group optionally with fused or pendant substituents. Such single site, preferably metallocene procatalysts, have been widely described in the scientific and patent literature for about twenty years.

The metallocene procatalyst may have a formula II:

(C_{P})ₘRₙMX_{q} (II)

wherein:
each Cp independently is an unsubstituted or substituted and/or fused homo- or heterocyclopentadienyl ligand, e.g. substituted or unsubstituted cyclopentadienyl, substituted or unsubstituted indenyl or substituted or unsubstituted fluorenyl ligand;
the optional one or more substituent(s) being independently selected preferably from halogen, hydrocarbyl (e.g. C₁-C₂₀-alkyl, C₂-C₂₀-alkenyl, C₂-C₂₀-alkynyl, C₃-C₁₂-cycloalkyl, C6-C₂₀-aryl or C₇-C₂₀-arylalkyl), C₃-C₁₂-cycloalkyl which contains 1, 2, 3 or 4 heteroatom(s) in the ring moiety, C₆-C₂₀-heteroaryl, C₁-C₂₀-haloalkyl, -SiR"₃, -OSiR"₃, -SR", -PR"₂ or -NR"₂,
each R" is independently a hydrogen or hydrocarbyl, e.g. C₁-C₂₀-alkyl, C₂-C₂₀-alkenyl, C₂-C₂₀-alkynyl, C₃-C₁₂-cycloalkyl or C₆-C₂₀-aryl; or e.g. in case of-NR"₂, the two substituents R" can form a ring, e.g. five- or six-membered ring, together with the nitrogen atom to which they are attached;
R is a bridge of 1-7 atoms, e.g. a bridge of 1-4 C-atoms and 0-4 heteroatoms, wherein the heteroatom(s) can be e.g. Si, Ge and/or O atom(s), wherein each of the bridge atoms may bear independently substituents, such as C₁-₂₀-alkyl, tri(C₁₋₂₀-alkyl)silyl, tri(C₁₋₂₀-alkyl)siloxy or C₆₋₂₀-aryl substituents); or a bridge of 1-3, e.g. one or two, hetero atoms, such as silicon, germanium and/or oxygen atom(s), e.g. - SiR¹₂-, wherein each R¹ is independently C₁₋₂₀-alkyl, C₆₋₂₀-aryl or tri(C₁₋₂₀-alkyl)silyl- residue, such as trimethylsilyl;
M is a transition metal of Group 3 to 10, preferably of Group 4 to 6, such as Group 4, e.g. Ti, Zr or Hf, especially Hf;
each X is independently a sigma-ligand, such as H, halogen, C₁₋₂₀-alkyl, C₁₋₂₀-alkoxy, C₂-C₂₀-alkenyl, C₂-C₂₀-alkynyl, C3-C12-cycloalkyl, C6-C₂₀-aryl, C6-C₂₀-aryloxy, C7-C₂₀-arylalkyl, C7-C20-arylalkenyl, -SR", -PR"₃, -SiR"₃, -OSiR"₃, -NR"₂ or -CH₂-Y, wherein Y is C6-C20-aryl, C6-C20-heteroaryl, C1-C₂₀-alkoxy, C6-C20-aryloxy, NR"₂, -SR", -PR"₃, ₋SiR"₃, or -OSiR"₃;
each of the above mentioned ring moieties alone or as a part of another moiety as the substituent for Cp, X, R" or R1 can further be substituted e.g. with C1-C20-alkyl which may contain Si and/or O atoms;
n is 0, 1 or 2, e.g. 0 or 1,
m is 1, 2 or 3, e.g. 1 or 2,
q is 1,2 or 3, e.g. 2 or 3,
wherein m+q is equal to the valency of M.

Suitably, in each X as -CH₂-Y, each Y is independently selected from C6-C20-aryl, NR"₂, -SiR"₃ or -OSiR"₃. Most preferably, X as -CH₂-Y is benzyl. Each X other than -CH₂-Y is independently halogen, C1-C20-alkyl, C1-C20-alkoxy, C6-C20-aryl, C7-C20-arylalkenyl or -NR"₂ as defined above, e.g. -N(C1-C20-alkyl)2.

Preferably, q is 2, each X is halogen or -CH₂-Y, and each Y is independently as defined above.

Cp is preferably cyclopentadienyl, indenyl, tetrahydroindenyl or fluorenyl, optionally substituted as defined above.

In a suitable subgroup of the compounds of formula II, each Cp independently bears 1, 2, 3 or 4 substituents as defined above, preferably 1, 2 or 3, such as 1 or 2 substituents, which are preferably selected from C1-C20-alkyl, C6-C20-aryl, C7-C20-arylalkyl (wherein the aryl ring alone or as a part of a further moiety may further be substituted as indicated above), -OSiR"₃, wherein R" is as indicated above, preferably C1-C20-alkyl.

R, if present, is preferably a methylene, ethylene or a silyl bridge, whereby the silyl can be substituted as defined above, e.g. a (dimethyl)Si=, (methylphenyl)Si= or (trimethylsilylmethyl)Si=; n is 0 or 1; m is 2 and q is two. Preferably, R" is other than hydrogen.

A specific subgroup includes the well known metallocenes of Zr, Hf and Ti with two η-5-ligands which may be bridged or unbridged cyclopentadienyl ligands optionally substituted with e.g. siloxy, or alkyl (e.g. C1-6-alkyl) as defined above, or with two unbridged or bridged indenyl ligands optionally substituted in any of the ring moieties with e.g. siloxy or alkyl as defined above, e.g. at 2-, 3-, 4- and/or 7-positions. Preferred bridges are ethylene or -SiMe₂.

The preparation of the metallocenes can be carried out according or analogously to the methods known from the literature and is within skills of a person skilled in the field. Thus for the preparation see e.g. EP-A-129 368, examples of compounds wherein the metal atom bears a -NR"₂ ligand see i.a. in WO-A-9856831 and WO-A-0034341. For the preparation see also e.g. in EP-A-260 130, WO-A-9728170, WO-A-9846616, WO-A-9849208, WO-A-9912981, WO-A-9919335, WO-A-9856831, WO-A-00/34341, EP-A-423 101 and EP-A-537 130.

Alternatively, in a further subgroup of the metallocene compounds, the metal bears a Cp group as defined above and additionally a η1 or η2 ligand, wherein said ligands may or may not be bridged to each other. Such compounds are described e.g. in WO-A-9613529, the contents of which are incorporated herein by reference.

Further preferred metallocenes include those of formula (I)

Cp'₂HfX'₂

wherein each X' is halogen, C₁₋₆ alkyl, benzyl or hydrogen;

Cp' is a cyclopentadienyl or indenyl group optionally substituted by a C₁₋₁₀ hydrocarbyl group or groups and being optionally bridged, e.g. via an ethylene or dimethylsilyl link. Bis (n-butylcyclopentadienyl) hafnium dichloride and Bis (n-butylcyclopentadienyl) hafnium dibenzyl are particularly preferred.

Metallocene procatalysts are generally used as part of a catalyst system which also includes a cocatalyst or catalyst activator, for example, an aluminoxane (e.g. methylaluminoxane (MAO), hexaisobutylaluminoxane and tetraisobutylaluminoxane) or a boron compound (e.g. a fluoroboron compound such as triphenylpentafluoroboron or triphentylcarbenium tetraphenylpentafluoroborate ((C₆H₅) ₃B⁺B-(C₆F₅)₄)). The preparation of such catalyst systems is well known in the field.

If desired the procatalyst, procatalyst/cocatalyst mixture or a procatalyst/cocatalyst reaction product may be used in unsupported form or it may be precipitated and used as such. One feasible way for producing the catalyst system is based on the emulsion technology, wherein no external support is used, but the solid catalyst is formed from by solidification of catalyst droplets dispersed in a continuous phase. The solidification method and further feasible metallocenes are described e.g. in WO03/051934 which is incorporated herein as a reference.

The activator is a compound which is capable of activating the transition metal component. Useful activators are, among others, aluminium.alkyls and aluminium alkoxy compounds. Especially preferred activators are aluminium alkyls, in particular aluminium trialkyls, such as trimethyl aluminium, triethyl aluminium and tri-isobutyl aluminium. The activator is typically used in excess to the transition metal component. For instance, when an aluminium alkyl is used as an activator, the molar ratio of the aluminium in the activator to the transition metal in the transition metal component is from 1 to 500 mol/mol, preferably from 2 to 100 mol/mol and in particular from 5 to 50 mol/mol.

It is also possible to use in combination with the above-mentioned two components different co-activators, modifiers and the like. Thus, two or more alkyl aluminium compounds may be used, or the catalyst components may be combined with different types of ethers, esters, silicon ethers and the like to modify the activity and/or the selectivity of the catalyst, as is known in the art.

Suitable combinations of transition metal component and activator are disclosed among others, in the examples of WO 95/35323.

Conventional cocatalysts, supports/carriers, electron donors etc can be used.

### Film Formation and Properties

The multimodal MDPE polymer of the invention is preferably formed into films. Thus, a film of the present invention comprises at least one layer, which layer comprises the multimodal MDPE polymer of the invention alone or together with further, e.g. one or two, polymer component(s) and optionally together with additives conventionally used in the film production, as defined below. Thus the films of the present invention may comprise a single layer (i.e. monolayer) or may be multilayered (e.g. comprise 2 to 7 layers). Multilayer films preferably comprise typically 2 to 5 layers, especially 2 or 3 layers.

The films may be made by any conventional film extrusion procedure known in the art including cast film and blown film extrusion. Thus the film may be produced by extrusion through an annular die and blowing into a tubular film by forming a bubble which is collapsed between nip rollers after solidification. This film can then be slit, cut or converted (e.g. gusseted) as desired. Conventional film production techniques may be used in this regard. If the film is a multilayer film then the various layers are typically coextruded. The skilled man will be aware of suitable extrusion conditions.

The resulting films may have any thickness conventional in the art. The thickness of the film is not critical and depends on the end use. Thus, films may have a thickness of, for example, 300 µm or less, typically 6 to 200 µm, preferably 10 to 180 µm, e.g. 20 to 150 µm or 20 to 120 µm. If desired, the polymer of the invention enables thicknesses of less than 100 µm, e.g. less than 50 µm. Films of the invention with thickness even less than 20 µm can also be produced whilst maintaining good mechanical properties.

As previously mentioned the films of the invention have good processablity properties and may enable reduction of the film thickness and thus increase the production speed of film preparation process.

The polymer of the invention has been found to allow the formation of films having an ideal balance of properties. They have excellent optical properties and are readily processed. In particular, films exhibit low haze.

The film prepared using the MDPE polymer of the invention exhibits excellent haze properties as defined above which haze properties which are comparable or improved over the haze properties of conventional LLDPE films.

The films of the invention, e.g. monolayer films, may be laminated on to barrier layers as is known in the art. For food and medical applications for example, it may be necessary to incorporate a barrier layer, i.e. a layer which is impermeable to water and oxygen, into the film structure. This can be achieved using conventional lamination techniques. Suitable barrier layers are known and include polyamide, ethylene vinyl alcohol, PET and metallised A1 layers.

Viewed from another aspect therefore the invention provides a laminate comprising a film as hereinbefore defined laminated onto a barrier layer.

In such an embodiment it may be convenient to laminate the barrier layer onto two monolayer films as hereinbefore described thereby forming a 3 layer structure in which the barrier layer forms the middle layer.

The films of the invention have a wide variety of applications but are of particular interest in packaging of food and drink, consumer and industrial goods, medical devices and in heavy duty packaging. Specific applications include industrial liners, heavy duty shipping sacks, carrier bags, bread bags and freezer bags.

### Other components

The multimodal polyethylene of the invention is typically employed in films along with any other component. Other polymer components include LDPE, LLDPE or HDPE polymers. Mixtures of the multimodal polyethylenes of the invention may also be employed. The composition can also contain conventional additives such as antioxidants, UV stabilisers, acid scavengers, nucleating agents, anti-blocking agents as well as polymer processing agent (PPA).

LDPE polymers which can be used preferably have the following properties:

The LDPE polymer may have a density of 920-935 kg/m³, especially 918 to 930 kg/m³, e.g. 920 to 930 kg/m³. The MFR₂ of the LDPE may range from 0.3 to 4 g/10min, e.g. 0.2 to 2.5 g/10 min, e.g. 0.2 to 2.0 g/10 min. Suitable LDPE's are commercially available from Borealis and other suppliers.

LLDPE polymers which can be used have a density of less than 925 kg/m³.

The LLDPE polymer may be formed from ethylene along with at least one C3-12 alpha-olefin comonomer, e.g. butene, hexene or octene. Preferably, the LLDPE is an ethylene hexene copolymer, ethylene octene copolymer or ethylene butene copolymer. The amount of comonomer incorporated in the LLDPE copolymer is preferably 0.5 to 12 mol%, e.g. 1 to 10% mole, especially 1.5 to 8% mole. The MFR₂ (melt flow rate ISO 1133 at 190°C under a load of 2.16 kg) of the LLDPE polymer should preferably be in the range 0.01 to 20 g/10 min, preferably 0.05 to 10 g/10 min, more preferably 0.1 to 6.0 g/10 min. In some embodiments MFR₂ of less than 3.0 g/10min may be desirable.

It is within the scope of the invention for the multimodal polyethylene of the invention to be combined with a multimodal LLDPE, e.g. a bimodal LLDPE

Suitable LLDPEs can be produced analogously to polymerisation process described above for multimodal polyethylene by adjusting the process conditions, such as ethylene, comonomer and hydrogen feed, polymerisation pressures and temperatures etc, in a known manner to provide the desired LLDPE properties including density and MFR values.

Usable Ziegler Natta-based and metallocene based LLDPEs are also commercially available from Borealis and other suppliers.

Although LDPE and LLDPE are mentioned other polymers including other HDPE polymers, homopolymer or random copolymer of propylene, heterophasic block polymer of propylene, e.g. ethylene-propylene rubber could be present.

Accordingly, the multimodal MDPE of the invention can be used alone, i.e. in the absence of other polymer components, or as a blend with one or more other polymer components in different end applications such as in a film layer. In blends, the amount of the multimodal MDPE is preferably at least 50 wt%, more preferably at least 80 wt%.

For film formation using a polymer mixture, e.g. a multimodal polyethylene of the invention in combination with another polymer component or simply with standard additives, it is important that the different polymer components be intimately mixed prior to extrusion and blowing of the film as otherwise there is a risk of inhomogeneities, e.g. gels, appearing in the film. Thus, it is especially preferred to thoroughly blend the components, for example using a twin screw extruder, preferably a counter-rotating extruder prior to extrusion and film blowing. Sufficient homogeneity can also be obtained by selecting the screw design for the film extruder such that it is designed for good mixing and homogenising.

The invention will now be described further with reference to the following non-limiting examples and Figures.
Figure 1 is a GPC curve for the components and final multimodal polymer of Run (example 1).
Figure 2 shows a comparison of relative haze (haze%/µm) vs density for various polymers described in Example 1 and 2.

### Determination methods

Unless otherwise stated, the film samples used for the measurements to define the above and below properties of the films were prepared as described under the heading **"Film Sample Preparation".**

**Density** of the materials is measured according to ISO 1183:1987 (E), method D, with isopropanol-water as gradient liquid. The cooling rate of the plaques when crystallising the samples was 15 C/min. Conditioning time was 16 hours.

**MFR₂ and MFR₂,** are measured according to ISO 1133 at 190°C at loads of 2.16 and 21.6 kg respectively.

Haze is measured according to ASTM D 1003. The relative haze is calculated by dividing the haze% of a film sample by the thickness of the film (haze%/µm). The film sample was a blown film sample prepared as described under **"Film sample preparation".**

### Molecular weights, molecular weight distribution, Mn, Mw, MWD

Mw/Mn/MWD are measured by Gel Permeation Chromatography (GPC) according to the following method:
The weight average molecular weight Mw and the molecular weight distribution (MWD = Mw/Mn wherein Mn is the number average molecular weight and Mw is the weight average molecular weight) is measured by a method based on ISO 16014-4:2003. A waters 150CV plus instrument, equipped with refractive index detector and online viscosimeter was used with 3 x HT6E styragel columns from Waters (divinylbenzene) and 1,2,4-trichlorobenzene (TCB, stabilized with 250 mg/L 2,6-Di tert butyl-4-methyl-phenol) as solvent at 140°C and a constant flow rate of 1 mL/min. 500 µL of sample solution were injected per analysis. The column set was calibrated using universal calibration (according to ISO 16014-2:2003) with narrow MWD polystyrene (PS) standards in the range of 1.05 kg/mol to 11 600 kg/mol Mark Houwink constants were used for polystyrene and polyethylene (K: 9.54 x 10⁻⁵ dL/g and a: 0.725 for PS, and K: 3.92*10-4 dL/g and a: 0.725 for PE). All samples were prepared by dissolving 0.5 - 3.5 mg of polymer in 4 mL (at 140°C) of stabilized TCB (same as mobile phase) and keeping for 2 hours at 140 °C and for another 2 hours at 160 °C with occasional shaking prior sampling in into the GPC instrument.

**Comonomer content** was determined by C¹³NMR. The C¹³NMR spectra of the polymers was recorded on Bruker 400MHz spectrometer at 130°C from samples dissolved in 1,2,4-trichlorobenzene/benzene-d6 (90/10 w/w).

### Film Sample Preparation

The following film preparation method was used for preparing the blown films used as film samples for determining the general properties of the films as defined above and below and in the examples:
Films were prepared by blown film extrusion on a small-scale ANKUTEC film line using the following conditions:
**Blowing Conditions:** The polymer compositions were blown to films of a thickness of approximately 40 µm on a commercial Ankutec film blowing line using the following conditions:
   - Output rate: 5,6 kg/h
   - Die diameter: 1,5 mm
   - Die gap: 50 mm
   - Screw speed: 90 rpm
   - Temperature profile: 180-180-200-200-200-200-200-200 °C
   - Winding speed: 8 m/min
   - FLH, (frost line height): 250 mm
   - BUR, (blow up ratio): 1: 3,5
   - Film width: 275 mm

### Examples

### Catalyst Preparation:

### Catalyst preparation example

**Complex:** The catalyst complex used in the polymerisation example was a silica supported bis(n-butyl cyclopentadienyl)hafnium dibenzyl, (n-BuCp)₂Hf(CH₂Ph)₂, and it was prepared according to "Catalyst Preparation Example 2" of WO2005/002744. The starting complex, bis(n-butyl cyclopentadienyl)hafnium dichloride, was prepared as described in "Catalyst Preparation Example 1" of said WO 2005/002744.

**Activated catalyst system:** Complex solution of 0.80 ml toluene, 38.2 mg (n-BuCp)₂Hf(CH₂Ph)₂ and 2.80 ml 30 wt% methylalumoxane in toluene (MAO, supplied by Albemarle) was prepared. Precontact time was 60 minutes. The resulting complex solution was added slowly onto 2.0 g activated silica (commercial silica carrier, XPO2485A, having an average particle size 20µm, supplied by Grace). Contact time was 2 h at 24°C. The catalyst was dried under nitrogen purge for 3 h at 50°C. The obtained catalyst had Al/Hf of 200 mol/mol; Hf 0.40 wt%.

### Example 1 and 2 - Improved Optical Properties at Medium Density

### Experimental setup

All experiments were carried out in a semi batchwise operated benchscale reactor equipped with a TEFLON modified stirrer together with a flat industrial spray nozzle (widening angle of 40° at p = 3 bar for improved comonomer distribution, reactor volume = 8 1). Nozzle specifications: type, 4001, standard spray, H-VV, VeeJet, orifice diameter, 0.66 mm, producer - Spraying Systems and Co.. All starting compounds (monomer, comonomer, hydrogen and nitrogen or propane) were fed and distributed through the nozzle.

### Polymerizations

The bimodal polymers were made using the following conditions:

### Step 1: Slurry polymerization (in isobutane) using a silica supported bis(n-butylcyclopentadienyl) hafnium dibenzyl catalyst prepared as described above.

The conditions of the slurry polymerisation in step 1 mimic the loop conditions (= loop reactor). The comonomer used was 1-butene, amount 50-100 ml. The molecular weight of the slurry product was adjusted with a blending gas comprising 3080 ppm hydrogen. The ethylene partial pressure is 6.2 bar, total pressure = 21 bar, diluent used = isobutane. Reactor temperature = 85°C. Upon completion of step 1, the diluent was evaporated, and the reaction proceeded to step 2.

### Step 2 Gas phase polymerization for producing the higher molecular weight fraction with low density

In step 2 the polymerisation was effected in the same reactor but as a gas phase polymerisation. The comonomer used was a mixture of 1-butene and 1-hexene (volume ratio 1/1). The inert gas used for adjusting the total reactor pressure was nitrogen. The monomer (ethylene) partial pressure was 6.2 bar, total pressure = 21 bar. Reactor temperature = 70°C.

A summary of all experimental conditions is given in table 1.

| | Example 1 | Example 2 |
|---|---|---|
| **Slurry reactor (=loop): preparation of LMW component** | | |
| catalyst amount [g] | 1.39 | 1.54 |
| T _{reactor, slurry} [°C] | 85 | 85 |
| p _{ethylene} [bar] | 6.2 | 6.2 |
| p ₜₒₜₐₗ [bar] | 21 | 21 |
| H₂ [ppm in C2] | 3080 | 3080 |
| V _{butene} [ml] | 57 | 107 |
| time [min] | 50 | 48 |
| density ₗₒₒₚ [kg/m³] | 947 | 940 |
| MFR₂ loop [g/10 min] | 173 | 190 |
| Mw (GPC) loop [g/mol] | 30 000 | 30 000 |
| MWD loop | 3.0 | 2.7 |
| **Gas phase reactor:** | | |
| **preparation of HMW component** | | |
| T _{reactor, gas phase} [°C] | 70 | 70 |
| p _{ethylene} [bar] | 6.2 | 6.2 |
| p ₜₒₜₐₗ [bar] | 21 | 21 |
| H₂ [ppm in C2] | 0 | 0 |
| V _{butene+hexene} [ml] | 164 | 180 |
| time [min] | 74 | 93 |
| V _{comonomer total} [ml] | 221 | 287 |
| time ₜₒₜₐₗ [min] | 124 | 141 |
| yield [g] | 2420 | 2480 |
| productivity [g/g] | 1741 | 1610 |
| activity [kg/gh] | 0.8 | 0.7 |
| **Final bimodal PE polymer composition** | | |
| density_{final} [kg/m³] | 931 | 932 |
| MFR_{2/final} [g/10 min] | 1.1 | 1.1 |
| Mw (GPC) final [g/mol] | 125 000 | 140 000 |
| MWD final | 6.6. | 7.0 |

Table 1 Experimental conditions used for the preparation of bimodal film samples with medium density and excellent optical properties.

The comonomer contents and ratios of the examples 1 and 2 are given below:

### Example 1

### LMW component: slurry (loop conditions)

- comonomer: butene 1 mol%,

### Final bimodal MDPE polymer:

- overall comonomer content: butene 1.5 mol% and hexene 0.2 mol%
- > total comonomer content of 1.7 mol%,
**ratio:** comonomer content (mol%) of LMW component/ total comonomer content (mol%) of final MDPE of 0.6

### Example.2:

### LMW component: slurry (loop conditions)

- comonomer: butene 1.6 mol%,

### Final bimodal MDPE polymer:

- overall comonomer content: butane 1.1 mol% and hexene 0.4 mol%
- > total comonomer content of 1.5 mol%,
ratio: comonomer content (mol%).of LMW component/ total comonomer content (mol%) of final MDPE of 1.1

### Polymer Analysis: GPC curves

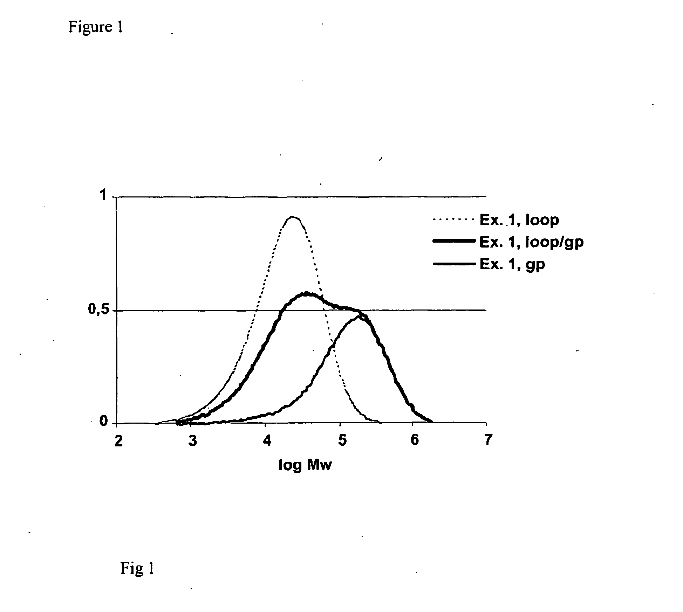

Polymer samples described in this invention show a pronounced bimodal molecular weight distribution (Fig. 1). The slurry made polymer has a molecular weight of around 30,000 with a corresponding MFR₂ of 173 - 190 g/10 min. The final film polymer shows a molecular weight between 125 000 and 140 000 g/mol with MFR₂ values around 1 g/10 min.

The gas phase peak is clearly separated from the unimodal slurry peak, which indicates a narrow molecular weight distribution. Calculation of molecular weight distributions of the gas phase made polymer reveal a corresponding MWD = 2 - 4 g/mol (Mw = 300 000 g/mol).

Polymer samples of examples 1 and 2 show symmetrical GPC curves in both slurry and gas phase stages of the polymerization..

### Optical Properties

The film samples of examples 1 and 2 of the invention and the reference examples were prepared according to the method as described above under "Film Sample **Preparation"** and were analyzed with respect to haze. The polymer compositions used for the comparison were commercially available unimodal and bimodal polymer references (prepared using a metallocene catalyst). The polymer and optical properties of the examples 1 and 2 and of the reference examples are given in table 2.

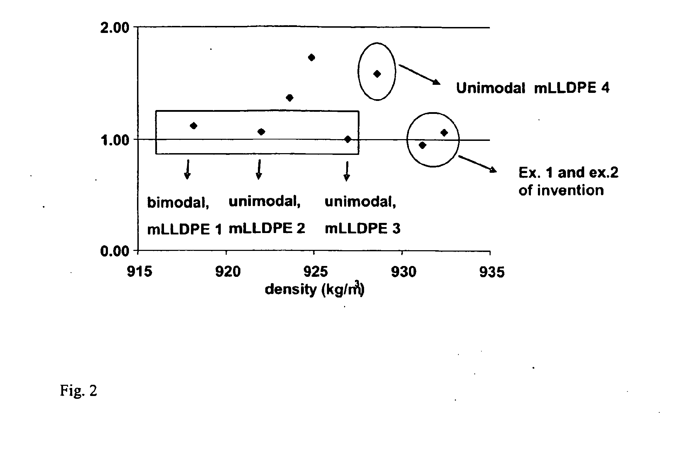

While increasing the density, the optical properties could be surprisingly retained (examples 1, 2, Fig. 2). A full comparison of optical data is provided in table 2.

**Table 2**

| | Polymer | dens. [kg/m³] | haze [%] | thickness [µm] | haze/thi [%/µm] |
|---|---|---|---|---|---|
| Ex. 1 | invention, bimodal | 931.2 | 38.1 | 40 | 0.95 |
| Ex. 2 | invention, bimodal | 932.4 | 50.8 | 48 | 1.06 |
| Refs | unimodal mLLDPE 4 | 928.6 | 63.3 | 40 | 1.58 |
| | unimodal mLLDPE 2 | 922 | 45.6 | 43 | 1.06 |
| | unimodal mLLDPE3 | 927 | 44 | 44 | 1.00 |
| | bimodal LLDPE1 | 918.2 | 52.7 | 47 | 1.12 |

Examples 1. and 2 of the invention with a bimodal molecular weight distribution, medium density and claimed comonomer distribution give excellent optical properties (low haze/thickness ratios). The optical parameters are unexpectedly better than some lower density unimodal references, and better than LLDPE bimodal reference material.

## Claims

1. A multimodal medium density polyethylene polymer obtainable using single site catalysis which comprises at least:
(A) a lower molecular weight (LMW) component which is a copolymer of ethylene with at least one comonomer, and
(B) a higher molecular weight (HMW) component which is a copolymer of ethylene with at least one comonomer; wherein
said multimodal medium density polyethylene polymer has a density of more than 925 kg/m³; and
the ratio between the comonomer content in mol% present in LMW component (A) and the total comonomer content in mol-% present in the multimodal medium density polyethylene polymer is more than 0.3.

2. A multimodal medium density polyethylene polymer as claimed in claim 1 having a density of 930 to 940 kg/m³.

3. A multimodal medium density polyethylene polymer as claimed in any preceding claim having an MFR₂ of 0.5 to 3 g/10min.

4. A multimodal medium density polyethylene polymer as claimed in any preceding claim which is bimodal.

5. A multimodal medium density polyethylene polymer as claimed in any preceding claim where the LMW component is a copolymer of ethylene and butene.

6. A multimodal medium density polyethylene polymer as claimed in any preceding claim where the HMW component is a copolymer of ethylene, butene and hexene.

7. A multimodal medium density polyethylene polymer as claimed in any preceding claim where the total comonomer content of the polymer is 1 to 3 mol%.

8. A multimodal medium density polyethylene polymer as claimed in any preceding claim having a haze thickness ratio (%/µm) of less 1.6.

9. A multimodal medium density polyethylene polymer as claimed in any preceding claim having a haze thickness ratio (%/µm) of less 1.1.

10. A multimodal medium density polyethylene polymer as claimed in any preceding claim having wherein the ratio between the comonomer content in mol-% present in LMW component (A) and the total comonomer content in mol-% present in the multimodal medium density polyethylene polymer is 0.5 to 1.1.

11. A polymer composition comprising the multimodal medium density polyethylene polymer as claimed in claim 1 to 10.

12. A film formed from the multimodal medium density polyethylene polymer as claimed in claim 1 to 10.

13. A film as claimed in claim 12 having a haze thickness ratio (%/µm) of less 1.1.

14. A process for the preparation of a multimodal medium density polyethylene as claimed in claim 1 to 10 comprising in a first liquid phase stage, polymerising ethylene and optionally at least one C₃₋₁₂ alpha-olefin in the presence of a single site polymerisation catalyst to form a LMW component and subsequently polymerising ethylene and at least one C3-12 alpha-olefin in the gas phase preferably using the same single site catalyst, preferably in the presence of the reaction product obtained from the first liquid stage, to form a HMW component.

15. The use of a multimodal medium density polymer, composition or film as claimed in claim 1 to 13 in packaging, e.g. food packaging.

## Patentansprüche

1. Multimodales Polyethylenpolymer mittlerer Dichte, das unter Anwendung der Katalyse mit einheitlichen aktiven Zentren erhalten werden kann, das zumindest folgendes aufweist:
(A) eine Komponente mit geringerem Molekulargewicht (LMW), die ein Copolymer von Ethylen mit zumindest einem Comonomer ist, und
(B) ein Komponente mit höherem Molekulargewicht (HMW), die ein Copolymer von Ethylen und mindestens einem Comonomer ist, wobei
das multimodale Polyethylenpolymer mittlerer Dichte eine Dichte von mehr als 925 kg/m³ aufweist; und
das Verhältnis zwischen dem Comonomergehalt in Mol-%, der in der LMW-Komponente (A) vorliegt, und dem gesamten Comonomergehalt in Mol-%, der im multimodalen Polyethylenpolymer mittlerer Dichte vorliegt, mehr als 0,3 beträgt.

2. Multimodales Polyethylenpolymer mittlerer Dichte nach Anspruch 1, das eine Dichte von 930 bis 940 kg/m³ aufweist.

3. Multimodales Polyethylenpolymer mittlerer Dichte nach einem der vorstehenden Ansprüche, das einen MFR₂-Wert von 0,5 bis 3 g/10 min aufweist.

4. Multimodales Polyethylenpolymer mittlerer Dichte nach einem der vorstehenden Ansprüche, das bimodal ist.

5. Multimodales Polyethylenpolymer mittlerer Dichte nach einem der vorstehenden Ansprüche, wobei die LMW-Komponente ein Copolymer von Ethylen und Buten ist.

6. Multimodales Polyethylenpolymer mittlerer Dichte nach einem der vorstehenden Ansprüche, wobei die HMW-Komponente ein Copolymer von Ethylen, Buten und Hexen ist.

7. Multimodales Polyethylenpolymer mittlerer Dichte nach einem der vorstehenden Ansprüche, wobei der gesamte Comonomergehalt des Polymers 1 bis 3 Mol-% beträgt.

8. Multimodales Polyethylenpolymer mittlerer Dichte nach einem der vorstehenden Ansprüche, das ein Trübungs/Dicke-Verhältnis (%/µm) von weniger als 1,6 aufweist.

9. Multimodales Polyethylenpolymer mittlerer Dichte nach einem der vorstehenden Ansprüche, das ein Trübungs/Dicke-Verhältnis (%/µm) von weniger als 1,1 aufweist.

10. Multimodales Polyethylenpolymer mittlerer Dichte nach einem der vorstehenden Ansprüche, wobei das Verhältnis zwischen dem Comonomergehalt in Mol-%, der in der LMW-Komponente (A) vorliegt, und dem gesamten Comonomergehalt in Mol-%, der im multimodalen Polyethylenpolymer mittlerer Dichte vorliegt, 0,5 bis 1,1 beträgt.

11. Polymerzusammensetzung, die das multimodale Polyethylenpolymer mittlerer Dichte nach den Ansprüchen 1 bis 10 aufweist.

12. Folie, die aus dem multimodalen Polyethylenpolymer mittlerer Dichte nach den Ansprüchen 1 bis 10 hergestellt ist.

13. Folie nach Anspruch 12, die ein Trübungs/Dicke-Verhältnis (%/µm) von weniger als 1,1 aufweist.

14. Verfahren zum Herstellen eines multimodalen Polyethylens mittlerer Dichte nach den Ansprüchen 1 bis 10, umfassend in einer ersten Flüssigphasenstufe das Polymerisieren von Ethylen und gegebenenfalls zumindest einem C₃₋₁₂-α-Olefin in Gegenwart eines Polymerisationskatalysators mit einheitlichen aktiven Zentren, so daß eine LMW-Komponente entsteht, und anschließendes Polymerisieren von Ethylen und zumindest einem C₃₋₁₂-α-Olefin in der Gasphase, vorzugsweise unter Verwendung des gleichen Katalysators mit einheitlichen aktiven Zentren, vorzugsweise in Gegenwart des Reaktionsproduktes, das aus der ersten Flüssigkeitsstufe erhalten wurde, so daß eine HMW-Komponente erzeugt wird.

15. Verwendung eines multimodalen Polymers mittlerer Dichte, einer Zusammensetzung oder Folie nach den Ansprüchen 1 bis 13 beim Verpacken, z.B. beim Verpacken von Lebensmitteln.

## Revendications

1. Polymère de polyéthylène moyenne densité multimodal pouvant être obtenu en utilisant une catalyse à site unique qui comprend au moins :
(A) un composant de faible poids moléculaire (LMW) qui est un copolymère d'éthylène avec au moins un comonomère, et
(B) un composant de poids moléculaire élevé (HMW) qui est un copolymère d'éthylène avec au moins un comonomère ;
ledit polymère multimodal de polyéthylène moyenne densité multimodal ayant une densité de plus de 925 kg/m³ : et
le rapport entre la teneur en comonomère, en % en moles, présent dans le composant LMW (A) et la teneur totale en comonomère, en % en moles, présent dans le polymère de polyéthylène moyenne densité multimodal étant supérieur à 0,3.

2. Polymère de polyéthylène moyenne densité multimodal selon la revendication 1, ayant une densité comprise dans la plage allant de 930 à 940 kg/m³.

3. Polymère de polyéthylène moyenne densité multimodal selon l'une quelconque des revendications précédentes ayant un MFR₂ de 0,5 à 3 g/10 minutes.

4. Polymère de polyéthylène moyenne densité multimodal selon l'une quelconque des revendications précédentes, qui est bimodal.

5. Polymère de polyéthylène moyenne densité multimodal selon l'une quelconque des revendications précédentes, dans lequel le composant LMW est un copolymère d'éthylène et de butène.

6. Polymère de polyéthylène moyenne densité multimodal selon l'une quelconque des revendications précédentes, dans lequel le composant HMW est un copolymère d'éthylène, de butène et d'hexène.

7. Polymère de polyéthylène moyenne densité multimodal selon l'une quelconque des revendications précédentes, dans lequel la teneur totale en comonomère du polymère est comprise dans la plage allant de 1 à 3 % en moles.

8. Polymère de polyéthylène moyenne densité multimodal selon l'une quelconque des revendications précédentes, ayant un rapport trouble/épaisseur (%/µm) inférieur à 1,6.

9. Polymère de polyéthylène moyenne densité multimodal selon l'une quelconque des revendications précédentes, ayant un rapport trouble/épaisseur (%/µm) inférieur à 1,1.

10. Polymère de polyéthylène moyenne densité multimodal selon l'une quelconque des revendications précédentes, dans lequel le rapport entre la teneur en comonomère, en % en moles, présent dans le composant LMW (A) et la teneur totale en comonomère, en % en moles, présent dans le polymère de polyéthylène moyenne densité multimodal est compris dans la plage allant de 0,5 à 1,1.

11. Composition de polymère comprenant le polymère de polyéthylène moyenne densité multimodal selon l'une quelconque des revendications 1 à 10.

12. Film formé à partir du polymère de polyéthylène moyenne densité multimodal selon l'une quelconque des revendications 1 à 10.

13. Film selon la revendication 12, ayant un rapport trouble/épaisseur (%/µm) inférieur à 1,1.

14. Procédé de préparation d'un polyéthylène moyenne densité multimodal selon l'une quelconque des revendications 1 à 10, comprenant dans une première étape en phase liquide, la polymérisation de l'éthylène et facultativement d'au moins une alpha-oléfine en C₃-C₁₂ en présence d'un catalyseur de polymérisation à site unique pour former un composant LMW, puis la polymérisation de l'éthylène et d'au moins une alpha-oléfine en C₃-C₁₂ dans la phase gazeuse, de préférence en utilisant le même catalyseur à site unique, de préférence en présence du produit réactionnel obtenu à partir de la première étape en phase liquide, pour former un composant HMW.

15. Utilisation d'un polymère de polyéthylène moyenne densité multimodal, d'une composition ou d'un film selon l'une quelconque des revendications 1 à 13, pour le conditionnement, par exemple le conditionnement de produits alimentaires.
